Europäisches Patentamt

**(19)** European Patent Office

Office européen des brevets

**(11)** Numéro de publication : **0 282 368 B1**

## **(12)** FASCICULE DE BREVET EUROPEEN

**(45)** Date de publication du fascicule du brevet :
**11.12.91 Bulletin 91/50**

**(51)** Int. Cl.⁵ : **C08L 75/06**

**(21)** Numéro de dépôt : **88400291.6**

**(22)** Date de dépôt : **09.02.88**

**(54)** Compositions à base de polyuréthanne permettant l'obtention par calandrage de matériaux biodégradables.

Le dossier contient des informations techniques présentées postérieurement au dépôt de la demande et ne figurant pas dans le présent fascicule.

**(30)** Priorité : **10.02.87 FR 8701623**

**(43)** Date de publication de la demande :
**14.09.88 Bulletin 88/37**

**(45)** Mention de la délivrance du brevet :
**11.12.91 Bulletin 91/50**

**(84)** Etats contractants désignés :
**AT BE CH DE ES GB GR IT LI LU NL SE**

**(56)** Documents cités :
**GB-A- 1 524 821
US-A- 4 021 388
WILEY Encyclopedia Vol 2, page 230
Taschenbuch der Kunststoffadditiven 15.7.10**

**(73)** Titulaire : **PENNEL et FLIPO
384 rue d'Alger
F-59504 Roubaix (FR)**

**(72)** Inventeur : **Aime, Jean-Marc
17 rue Marcel Philippe
F-60100 Creil (FR)**
Inventeur : **Mention, Georges
4bis, rue de Bournonville
F-60200 Compiegne (FR)**
Inventeur : **Thouzeau, André
42, rue La Bruyère
F-75009 Paris (FR)**

**(74)** Mandataire : **Polus, Camille et al
c/o Cabinet Lavoix 2, Place d'Estienne d'Orves
F-75441 Paris Cedex 09 (FR)**

## Description

La présente invention concerne des feuilles, films ou plaques biodégradables à base de polyuréthanne, ainsi que leur obtention par calandrage.

On déjà proposé de fabriquer des feuilles biodégradables par extrusion soufflage de mélanges de polyuréthanne et d'amidon (brevet britannique GB-A-1.524.821). Toutefois, de tels mélanges ne peuvent être soumis à la technique du calandrage dans des conditions de productivité acceptables. En outre, la biodégradabilité et les propriétés mécaniques des feuilles obtenues peuvent être insuffisantes, en fonction de la nature du polyuréthanne utilisé.

La présente invention a pour but de proposer des feuilles, films ou plaques (dits ci-après "produits") à base de polyuréthanne qui aient de bonnes qualités mécaniques et de biodégradabilité et qui puissent être obtenus par calandrage, dans les conditions qui sont habituellement mises en oeuvre par exemple pour la fabrication des feuilles de PVC souples (débit machine comparable, ligne classique de calandrage, etc.).

L'invention concerne par conséquent notamment les compositions à mettre en oeuvre pour l'obtention de ces matériaux.

Selon l'invention, ces compositions comprennent, en plus de la résine polyuréthanne qui en est le constituant essentiel, un hydrate de carbone, au moins un deuxième polymère thermoplastique miscible à l'état fondu avec le polyuréthanne et/ou au moins un troisième polymère biodégradable choisi parmi les polyesters aliphatiques biodégradables, de préférence de même nature que la base polyester du polyuréthanne mis en oeuvre.

De préférence, le deuxième polymère utilisé est du PVC ou un mélange de PVC et d'un plastifiant monomérique ou polymérique du PVC.

Le plastifiant est par exemple un phtalate, tel que le dioctylphtalate.

Ce deuxième polymère éventuellement plastifié, lorsqu'il n'est pas lui-même biodégradable, est de préférence mis en oeuvre en quantité aussi faible que possible, si la biodégradabilité est la principale qualité recherchée. Cette proportion sera fonction du taux d'hydrate de carbone introduit, par rapport auquel elle pourra représenter par exemple 25 à 100% en poids, tout en étant inférieure ou égale à 13,5% en poids par rapport au mélange total.

Le polyuréthanne mis en oeuvre est choisi parmi les polyuréthannes thermoplastiques aliphatiques à base polyester. La base polyester sera choisie de préférence parmi les bases des composés ayant la meilleure biodégradabilité, par exemple la poly-ε-caprolactone, la poly-β-caprolactone. Par exemple, on utilisera un polyuréthanne à base polycaprolactone.

De façon avantageuse, une composition selon l'invention associera une polycaprolactone (troisième polymère) à un polyuréthanne à base polycaprolactone.

Ainsi, le troisième polymère, lorsqu'il est présent dans la composition de l'invention, le sera dans une proportion allant jusqu'à 20% en poids par rapport au mélange global.

On pourra également utiliser le poly-β-hydroxybutyrate et le polyhydroxyvalérate.

L'hydrate de carbone est un composé tel que fécule, amidon, amidon modifié, cellulose, dérivés de la cellulose, dextrine, lactose, manitol, lignine et il est utilisé en proportion de 10 à 45% en poids par rapport au mélange global.

Les Demandeurs ont constaté que la présence du troisième polymère peut faciliter la mise en oeuvre, augmenter la biodégradabilité et les propriétés mécaniques des produits obtenus.

Les compositions selon l'invention comprennent en outre les additifs classiques utilisés dans l'industrie du calandrage : lubrifiants, pigments, colorants, stabilisants, antioxydants, antibloquants, etc., bien connus de l'homme de l'art.

Les compositions selon l'invention sont mises en oeuvre par la technique classique du calandrage, telle qu'elle est utilisée pour la fabrication des feuilles de PVC. Il est à noter que l'appareillage utilisé pour le PVC peut être mis en oeuvre sans modification et avec des débits de production équivalents.

D'autres techniques de fabrication connues peuvent être également utilisées éventuellement à la place du calandrage pour la fabrication de feuilles, films ou plaques équivalentes, par exemple l'extrusion calandrage par filière plate, l'injection, etc.

Les produits selon l'invention ont des propriétés qui sont naturellement fonction de la composition de la formulation.

La biodégradabilité totale en poids peut atteindre 96%. La vitesse de biodégradation déterminée selon la norme AFNOR NFX 41-514 (enfouissement dans un sol normalisé à 30°C, 95% d'humidité relative sur une feuille de 0,15 mm d'épaisseur) conduit à une perte totale des caractéristiques mécaniques de la feuille en un temps qui peut atteindre moins d'un mois.

Les produits obtenus sont élastiques, soudables, y compris par haute fréquence. Ils présentent un toucher agréable et doux, dû à l'association polyuréthanne-hydrate de carbone.

Ils ont des caractéristiques mécaniques convenables pour leur utilisation, dans le domaine de l'emballage par exemple.

Ils sont stables au stockage dans les conditions normales.

Ces produits selon l'invention peuvent être utilisés :

    — comme enveloppes mortuaires en conformité avec la législation française (housse, linceul et capitonnage des cercueils) ;
— comme films agricoles ;
— comme films d'emballage souples ;
— comme matériaux de remplissage ou de rembourrage.

## Exemple 1

On mélange à température ambiante, dans un mélangeur à pales :
— d'une part 40 parties de polyuréthanne à base polycaprolactone et 13,5 parties de polycaprolactone ;
— d'autre part, 13,5 parties de PVC, 5,5 parties de dioctylphtalate, 27 parties de fécule de pomme de terre et 0,5 partie d'un stabilisant organométallique.

L'homogénéisation des deux mélanges est ensuite réalisée dans un mélangeur interne à 160°C pendant quelques minutes.

La mise en oeuvre est effectuée par calandrage sur une calandre à 4 cylindres, les températures des cylindres étant comprises entre 160 et 120°C.

On fabrique ainsi un film de 0,12 mm d'épaisseur et 2 mètres de largeur avec une vitesse linéaire de 30 mètres par minute.

## 1) Les caractéristiques mécaniques du film sont les suivantes :

a) caractéristiques mécaniques, en traction à 23°C suivant norme NFT 54-102 :
- module à 100% d'allongement : 9 MPa,
- force à la rupture : 15 MPa,
- allongement à la rupture : 250% ;

b) résistance à la déchirure à 23°C, suivant normes NFT 46-007 et ISO 34 :
- éprouvette en croissant, déchirure amorcée:
  à une vitesse d'étirement de 50 mm/mn :
  — dans le sens trame : 6 MPa,
  — dans le sens chaîne : 7 MPa
  à une vitesse d'étirement de 500 mm/mn :
  — dans le sens trame : 7,5 MPa,
  — dans le sens chaîne : 9 MPa ;
- éprouvette en croissant, déchirure non amorcée.
  à une vitesse d'étirement de 50 mm/mn :
  — dans le sens trame : 22 Mpa
  — dans le sens chaîne : 25 Mpa ;
  à une vitesse d'étirement de 500 mm/mn :
  — dans le sens trame : 12 MPa,
  — dans le sens chaîne : 12 MPa ;
- éprouvette angulaire, déchirure amorcée :
  — dans le sens trame : 6 MPa,
  — dans le sens chaîne : 6 MPa.

## 2) Biodégradabilité

Suivant la norme NFX 41-514, on observe une diminution des propriétés mécaniques du film, plus exactement :
— au bout d'une semaine, le film est envahi totalement par des moisissures (changement de coloration). Par un examen plus approfondi au microscope à balayage électronique, on remarque la formation très nette de réseaux tridimensionnels qui correspondent à l'envahissement par les moisissures ;
— au bout de 15 jours d'enfouissement, un examen en microscope à balayage électronique montre la formation de microfissurations, caractéristiques de la dégradation du polyuréthanne ;
— au bout de 10 semaines, l'échantillon laisse apparaître des fissurations visibles à l'oeil nu. L'échantillon est alors fragmenté et a perdu toutes ses propriétés mécaniques.

## Exemple 2

Dans le but de réaliser une feuille présentant une biodégradabilité accrue, on opère comme dans l'exemple 1, sauf que l'on utilise les proportions suivantes :
— polyuréthanne : 40 parties,
— polycaprolactone : 18 parties,
— PVC : 4,5 parties,
— DOP : 4 parties,
— fécule : 33 parties,
— stabilisant : 0,5 partie.

Sur la feuille obtenue, on effectue un essai de biodégradabilité suivant la norme NFX 41-514 :
— au bout de 3 jours, on observe un changement de coloration caractérisant le début d'envahissement par les moisissures ;
— au bout d'une semaine, la feuille est totalement envahie par les moisissures et présente une coloration très sombre ;
— au bout de deux semaines, l'échantillon laisse apparaître des fragmentations mécaniques visibles à l'oeil nu avec un accroissement de la microfaune environnante ;
— au bout de quatre semaines, on observe une disparition partielle de la matière de l'échantillon et, par conséquent, la perte totale des priorétés mécaniques.

## Exemple 3

On opère comme dans l'exemple 1, en utilisant les proportions suivantes :
— polyuréthanne : 40 parties,
— polycaprolactone : 25 parties,
— PVC : 5 parties,
— DOP : 4 parties,

— fécule : 25 parties,

— autres additifs : 1 partie.

Sur la feuille obtenue, on détermine la biodégradabilité, d'une part dans les conditions ordinaires, d'autre part en étirant le film dans sa limite de réponse élastique. On observe une fragmentation à l'échelle microscopique analysée au microscope à balayage électronique, qui passe de 10 semaines à 5 semaines lorsque le film est sous tension.

Cet essai montre que, même avec une composition avec une forte teneur en matériau polymérique, la vitesse de dégradation reste élevée.

Il va de soi que la présente invention n'a été décrite qu'à titre illustratif et nullement limitatif et que toute modification, notamment au niveau des équivalences techniques, pourra y être apportée sans sortir de son cadre.


## Revendications

1. Compositions biodégradables à base de polyuréthanne et d'hydrate de carbone, caractérisées en ce que le polyuréthanne est un polyuréthanne à base polyester et en ce que les compositions comprennent, en vue de leur mise en oeuvre par calandrage, un deuxième polymère constitué par du PVC ou par un mélange de PVC et d'un plastifiant monomérique ou polymérique du PVC, ce polymère étant présent à une concentration inférieure ou égale à 13,5% en poids par rapport au mélange total.

2. Compositions selon la revendication 1, caractérisées en ce qu'elles contiennent, en outre, un troisième polymère biodégradable choisi parmi les polyesters aliphatiques, de préférence de même nature que la base polyuréthanne dans une proportion allant jusqu'à 20% en poids du mélange total.

3. Compositions selon la revendication 1 ou 2 caractérisées en ce que le plastifiant est un phtalate comme le dioctylphtalate.

4. Compositions selon l'une quelconque des revendications 1 à 3 caractérisées en ce que l'hydrate de carbone est un composé tel que fécule, amidon, amidon modifié, cellulose, dérivés de la cellulose, dextrine, lactose, mannitol, lignine et qu'il est utilisé en proportion de 10 à 45% en poids par rapport au mélange total.

5. Compositions selon l'une quelconque des revendications 1 à 4 caractérisées en ce que le polyuréthanne mis en oeuvre est choisi parmi les polyuréthannes thermoplastiques aliphatiques à base polyester, elle-même choisie de préférence parmi les bases des composés ayant la meilleure biodégradabilité, par exemple la poly-Σ-caprolactone, la poly-β-caprolactone.

6. Compositions selon l'une quelconque des revendications 1 à 5 caractérisées en ce qu'elles associent, à titre de troisième polymère, une polycaprolactone à une polyuréthanne à base polycaprolactone.

7. Compositions selon l'une quelconque des revendications 1 à 5 caractérisées en ce qu'elles associent au polyuréthanne un poly-β-hydroxybutyrate ou un polyhydroxyvalérate.

8. Application des compositions selon l'une quelconque des revendications 1 à 7 à l'obtention de feuilles, films ou plaques biodégradables.

9. Application des compositions selon l'une quelconque des revendications 1 à 7 à l'obtention par calandrage de feuilles, films ou plaques biodégradables.

10. Feuilles, films ou plaques biodégradables obtenus à partir des compositions selon l'une quelconque des revendications 1 à 7.

11. Application des feuilles, films ou plaques biodégradables selon la revendication 10 comme enveloppes mortuaires, films agricoles, films d'emballage souples, matériaux de remplissage ou de rembourrage.


## Claims

1. Biodegradable compositions based on polyurethane and carbohydrate, characterised in that the polyurethane is a polyester-based polyurethane and in that the compositions comprise, with a view to their processing by calendering, a second polymer consisting of PVC or of a mixture of PVC and of a monomeric or polymeric plasticiser for PVC, this polymer being present in a concentration lower than or equal to 13.5% by weight relative to the total mixture.

2. Compositions according to Claim 1, characterised in that they additionally contain a third biodegradable polymer chosen from aliphatic polyesters, preferably of the same kind as the polyurethane base, in a proportion ranging up to 20% by weight of the total mixture.

3. Compositions according to Claim 1 or 2, characterised in that the plasticiser is a phthalate such as dioctyl phthalate.

4. Compositions according to any one of Claims 1 to 3, characterised in that the carbohydrate is a compound such as tuber starch, starch, modified starch, cellulose, cellulose derivatives, dextrin, lactose, mannitol, lignin, and that it is employed in a proportion of 10 to 45% by weight relative to the total mixture.

5. Compositions according to any one of Claims 1 to 4, characterised in that the polyurethane processed is chosen from polyester-based aliphatic thermoplastic polyurethanes, the base itself being chosen preferably from the bases of the compounds which have the best biodegradability, for example poly-ε-caprolactone or poly-β-caprolactone.

6. Compositions according to any one of Claims 1 to 5, characterised in that they combine, by way of third polymer, a polycaprolactone with a polycaprolactone-based polyurethane.

7. Compositions according to any one of Claims 1 to 5, characterised in that they combine the polyurethane with a poly-β-hydroxybutyrate or a polyhydroxyvalerate.

8. Application of the compositions according to any one of Claims 1 to 7 to the production of biodegradable sheets, films or plates.

9. Application of the compositions according to any one of Claims 1 to 7 to the production of biodegradable sheets, films or plates by calendering.

10. Biodegradable sheets, films or plates obtained from compositions according to any one of Claims 1 to 7.

11. Application of the biodegradable sheets, films or plates according to Claim 10 as mortuary shrouds, agricultural films, flexible packaging films, and filling or packing materials.

## Patentansprüche

1. Biologisch abbaubare Zusammensetzung auf der Basis von Polyurethan und Kohlehydrat, gekennzeichnet dadurch, daß das Polyurethan ein Polyurethan auf Polyesterbasis ist und die Zusammensetzung zum Kalandrieren ein zweites Polymer aus PVC oder aus Mischung von PVC mit einem monomeren oder polymeren Weichmacher von PVC enthält, wobei das Polymer in einer Konzentration von gleich oder kleiner 13,5 Gew.-%, bezogen auf die Gesamtmischung, enthalten ist.

2. Zusammensetzungen nach Anspruch 1, dadurch gekennzeichnet, daß sie ein drittes biologisch abbaubares Polymer, nämlich aliphatische Polyester, vorzugsweise auf gleicher Basis wie das Basispolyurethan in Anteilen bis zu 20 Gew.-%, bezogen auf die Gesamtmischung, enthält.

3. Zusammensetzungen nach Anspruch 1 oder 2, dadurch gekennzeichnet, daß der Weichmacher ein Phtalat wie Dioctylphtalat ist.

4. Zusammensetzungen nach einem der vorhergehenden Ansprüche 1 bis 3, dadurch gekennzeichnet, daß das Kohlehydrat Stärke, Stärkemehl, modifizierte Stärke, Zellulose, Zellulosederivate, Dextrin, Lactose, Mannitol, Lignin ist und in Mengen von 10 bis 45 Gew.-%, bezogen auf die Gesamtmischung, verwendet wird.

5. Zusammensetzungen nach einem der Ansprüche 1 bis 4, dadurch gekennzeichnet, daß al aliphatische thermoplastische Polyurethane auf der Basis von Polyester, vorzugsweise mit besonders guter biologischer Abbaubarkeit, beispielsweise Poly-Σ-caprolacton, Poly-β-caprolacton verwendet werden.

6. Zusammensetzungen nach einem der Ansprüche 1 bis 5, dadurch gekennzeichnet, daß als drittes Polymer ein Polycaprolacton oder ein Polyurethan auf der Basis von Polycaprolacton verwendet wird.

7. Zusammensetzungen nach einem dar vorhergehenden Anspruche 1 bis 5, dadurch gekennzeichnet, daß sie mit dem Polyurethan ein Poly-β-hydroxybutyrat oder ein Polyhydroxyvalerat enthalten.

8. Anwendung der Zusammenzetzungen nach einem der Ansprüche 1 bis 7 zur Herstellung von biologisch abbaubaren Filmen, Folien oder Platten.

9. Anwendung der Zusammensetzungen gemäß einem der Ansprüche 1 bis 7 zur Herstellung von biologisch abbaubaren Filmen, Folien oder Platten durch Kalandrieren.

10. Biologisch abbaubare Filme, Folien oder Platten aus Zusammensetzungen gemäß einem der Ansprüche 1 bis 7.

11. Anwendung der biologisch abbaubaren Filme, Folien oder Platten nach Anspruch 10 als Bestattungshüllen, landwirtschaftliche Folien, elastische Verpackungsfilme und -folien, Ausfüllmaterialien oder Polstermaterial.